# EUROPEAN PATENT APPLICATION

(11) **EP 4 379 975 A1**
(43) Date of publication of application: **05.06.2024**
(21) Application number: 22864734.3
(22) Date of filing: 02.09.2022
(51) Int. Cl.: H01R 35/04

(54) **LEAD BLOCK, AND ROTATING CONNECTOR DEVICE**

(30) Priority: 03.09.2021 JP 2021143808
(71) Applicant: FURUKAWA ELECTRIC CO., LTD., Tokyo 100-8322 (JP); Furukawa Automotive Systems Inc., Inukami-gun, Shiga 522-0242 (JP)
(72) Inventor: HAMASAKI Shinichi, Inukami-gun, Shiga 522-0242 (JP); ZARUHATA Masahiro, Inukami-gun, Shiga 522-0242 (JP); TAJIRI Yoji, Inukami-gun, Shiga 522-0242 (JP); SUZUKI Yoshiyuki, Inukami-gun, Shiga 522-0242 (JP)
(74) Representative: Weickmann & Weickmann PartmbB
(86) International application number: PCT/JP2022/033155
(87) International publication number: WO 2023/033152

(57) **Abstract**

A lead block (30) comprises a plurality of connection pins (31) and a pin holder (32). The plurality of connection pins (31) is arranged at intervals in an arrangement direction (D11). The pin holder (32) holds the plurality of connection pins (31). The plurality of connection pins (31) protrudes from the pin holder (32) in a protruding direction (D12) perpendicular to the arrangement direction (D11). The pin holder (32) includes an inclined surface (35) inclined relative to the protruding direction (D12).

## Description

### Technical Field

The technology disclosed in the present application relates to a lead block and a rotary connector device.

### Background Art

Patent Literature 1 describes a rotary connector device including a lead block. In the rotary connector device described in Patent Literature 1, a connector body part (451) is arranged in a space inside the connector housing (341).

### Citation List

### Patent Literature

Patent Literature 1: Japanese Laid-Open Patent Publication No. 2015-109144

### Summary of Invention

### Technical Problem

Due to manufacturing errors in at least one of the connector housing and the connector body part, the connector body part may wobble relative to the connector housing, and then the position of the connector body part may significantly deviate from its designed position. The deviation of the connector body part may prevent a vehicle-body-side connector or a steering-side connector from being successfully inserted into the connector body part.

The object of the technology disclosed in the present application is to provide a lead block and a rotary connector device that can reduce the wobble of the lead block.

### Solution to Problem

In accordance with a first aspect, a lead block for a rotary connector device comprises a plurality of connection pins and a pin holder. The plurality of connection pins is arranged at intervals in an arrangement direction. The pin holder holds the plurality of connection pins. The plurality of connection pins protrudes from the pin holder in a protruding direction perpendicular to the arrangement direction. The pin holder includes an inclined surface inclined relative to the protruding direction.

With the lead block according to the first aspect, by bringing the inclined surface into contact with the lead-block attachment portion, it is possible to reduce the wobble of the lead block relative to the lead-block attachment portion in the protruding direction and a direction perpendicular to the protruding direction.

In accordance with a second aspect, in the lead block according to the first aspect, the inclined surface includes a first inclined surface inclined relative to the protruding direction. The first inclined surface is inclined relative to a thickness direction perpendicular to the arrangement direction and the protruding direction.

With the lead block according to the second aspect, by bringing the first inclined surface into contact with the lead-block attachment portion, it is possible to reduce the wobble of the lead block relative to the lead-block attachment portion in the protruding direction and the thickness direction.

In accordance with a third aspect, in the lead block according to the second aspect, the pin holder includes a first end portion and a second end portion provided on an opposite side of the first end portion in the protruding direction. The plurality of connection pins protrudes from the first end portion in the protruding direction. The first inclined surface is inclined relative to the protruding direction such that a first distance defined in the thickness direction from the plurality of connection pins to the first inclined surface decreases toward the first end.

With the lead block according to the third aspect, in a case where an external connector is pulled out of the lead block, it is possible to reduce fall of the lead block from the lead-block attachment portion by the first inclined surface.

In accordance with a fourth aspect, in the lead block according to the second and the third aspect, the inclined surface includes a second inclined surface inclined relative to the arrangement direction and the protruding direction.

With the lead block according to the fourth aspect, by bringing the second inclined surface into contact with the lead-block attachment portion, it is possible to reduce the wobble of the lead block relative to the lead-block attachment portion in the arrangement direction and the protruding direction. This can reliably reduce the wobble of the lead block.

In accordance with a fifth aspect, in the lead block according to the fourth aspect, the pin holder includes a main portion and a protruding portion. The main portion includes the first inclined surface. The protruding portion protrudes from the first inclined surface in the thickness direction and includes the second inclined surface.

With the rotary connector device according to the fifth aspect, it becomes easy to form the second inclined surface with the protruding portion.

In accordance with a sixth aspect, in the lead block according to the fifth aspect, the inclined surface includes a third inclined surface inclined relative to the protruding direction and the thickness direction. The protruding portion includes the third inclined surface.

With the lead block according to the sixth aspect, by bringing the third inclined surface into contact with the lead-block attachment portion, it is possible to reduce the wobble of the lead block relative to the lead-block attachment portion in the protruding direction and the thickness direction. This can more reliably reduce the wobble of the lead block.

In accordance with a seventh aspect, in the lead block according to any one of the second to sixth aspects, the pin holder includes a reverse surface provided on a reverse side of the first inclined surface in the thickness direction. The reverse surface is parallel to the protruding direction.

With the lead block according to the seventh aspect, the reverse surface makes the position of the lead block in the thickness direction more stable.

In accordance with an eighth aspect, in the lead block according to the seventh aspect, the reverse surface is parallel to the arrangement direction.

With the lead block according to the eighth aspect, the reverse surface reliably makes the position of the lead block in the thickness direction more stable.

In accordance with a ninth aspect, in the lead block according to any one of the first to eighth aspects, the pin holder includes a coupling portion configured to couple another lead block and the pin holder.

With the lead block according to the ninth aspect, the coupling portion makes it easier to attach the lead block and another lead block to the lead-block attachment portion as a single unit.

In accordance with a tenth aspect, in the lead block according to any one of the first to ninth aspects, the pin holder includes a first lateral surface facing in the arrangement direction, and a first protruding portion protruding from the first lateral surface. The first protruding portion includes the inclined surface.

With the lead block according to the tenth aspect, since the first protruding portion including the inclined surface is provided to the first lateral surface, it becomes easy to reduce the wobble of the lead block relative to the lead-block attachment portion at least in the arrangement direction. Further, in a case where there is only one lead block, it becomes easy to reduce the wobble of the lead block relative to the lead-block attachment portion solely with the inclined surface of the first protruding portion.

In accordance with an eleventh aspect, in the lead block according to the tenth aspect, the pin holder includes a second protruding portion protruding from the inclined surface.

With the lead block according to the eleventh aspect, when the lead block is attached to the lead-block attachment portion, the second protruding portion is deformed between the first protruding portion and the lead-block attachment portion. This can absorb the dimensional error of at least one of the lead block and the lead-block attachment portion.

In accordance with a twelfth aspect, a rotary connector device comprises a stator, a rotator provided rotatably about a rotational axis relative to the stator, and the lead block according to any one of the first to eleventh aspects. At least one of the stator and the rotator includes a lead-block attachment portion. The lead block is attached to the lead-block attachment portion.

With the rotary connector device according to the twelfth aspect, by bringing the inclined surface into contact with the lead-block attachment portion, it is possible to reduce the wobble of the lead block relative to the lead-block attachment portion in the protruding direction and a direction perpendicular to the protruding direction.

In accordance with a thirteenth aspect, in the rotary connector device according to the twelfth aspect, the lead-block attachment portion includes an inner inclined surface which is contactable with the inclined surface of the pin holder in a state where the lead block is attached to the lead-block attachment portion.

With the rotary connector device according to the thirteenth aspect, by bringing the inclined surface into contact with the inner inclined surface of the lead-block attachment portion, it is possible to reduce the wobble of the lead block relative to the lead-block attachment portion in the protruding direction and a direction perpendicular to the protruding direction.

In accordance with a fourteenth aspect, in the rotary connector device according to the twelfth or thirteenth aspect, the lead-block attachment portion includes a lead-block housing space housing the lead block in a state where the lead block is attached to the lead-block attachment portion, and a holding pawl holding the lead block in a state where the lead block is housed in the lead-block housing space.

With the rotary connector device according to the fourteenth aspect, the lead block can be held by the holding pawl in a state where the lead block is housed in the lead-block housing space. Thus, it is possible to reduce the wobble of the lead block relative to the lead-block attachment portion and to reliably reduce fall of the lead block.

In accordance with a fifteenth aspect, in the rotary connector device according to any one of the twelfth to fourteenth aspects, the lead-block attachment portion includes a third protruding portion protruding from the inner inclined surface.

In the rotary connector device according to the fifteenth aspect, when the lead block is attached to the lead-block attachment portion, the third protruding portion is deformed between the lead block and the inner inclined surface. This can absorb the dimensional error of at least one of the lead block and the lead-block attachment portion.

In accordance with a sixteenth aspect, in the rotary connector device according to any one of the twelfth to fifteenth aspects, the lead block is attachable to the lead-block attachment portion in only a specific orientation.

With the rotary connector device according to the sixteenth aspect, it is possible to suppress or prevent wrong assembly when the lead block is attached to the lead-block attachment portion.

### Advantageous Effects of Invention

With the technology disclosed in the present application, it is possible to provide a lead block and a rotary connector device that can reduce the wobble of the lead block.

### Brief Description of Drawings

FIG. 1 is a top view of a rotary connector device in accordance with a first embodiment.
FIG. 2 is a cross-sectional view of the rotary connector device shown in FIG. 1.
FIG. 3 is a perspective view of a lead block of the rotary connector device shown in FIG. 1.
FIG. 4 is a cross-sectional view of the lead block taken along line IV-IV of FIG. 3.
FIG. 5 is a cross-sectional view of the lead block and a rotator taken along line V-V of FIG..6.
FIG. 6 is a cross-sectional view of a lead block and the rotator taken along line VI-VI of FIG. 5.
FIG. 7 is a cross-sectional view of the lead block and the rotator taken along line VII-VII of FIG. 6.
FIG. 8 is a perspective view of the rotator.
FIG. 9 is a perspective view of the lead block of the rotary connector device shown in FIG. 1.
FIG. 10 is a cross-sectional view of the lead block and the rotator taken along line X-X of FIG. 5.
FIG. 11 is a perspective view of a lead block of a rotary connector device according to a first modification.
FIG. 12 is a perspective view of a lead block of a rotary connector device according to a second modification.
FIG. 13 is a perspective view of the lead block of the rotary connector device according to the second modification.
FIG. 14 is a perspective view of a lead-block attachment portion of a rotary connector device according to a third modification.

### Description of Embodiments

Embodiments will be described below with reference to the drawings. In the drawings, the same reference signs indicate corresponding or identical configurations.

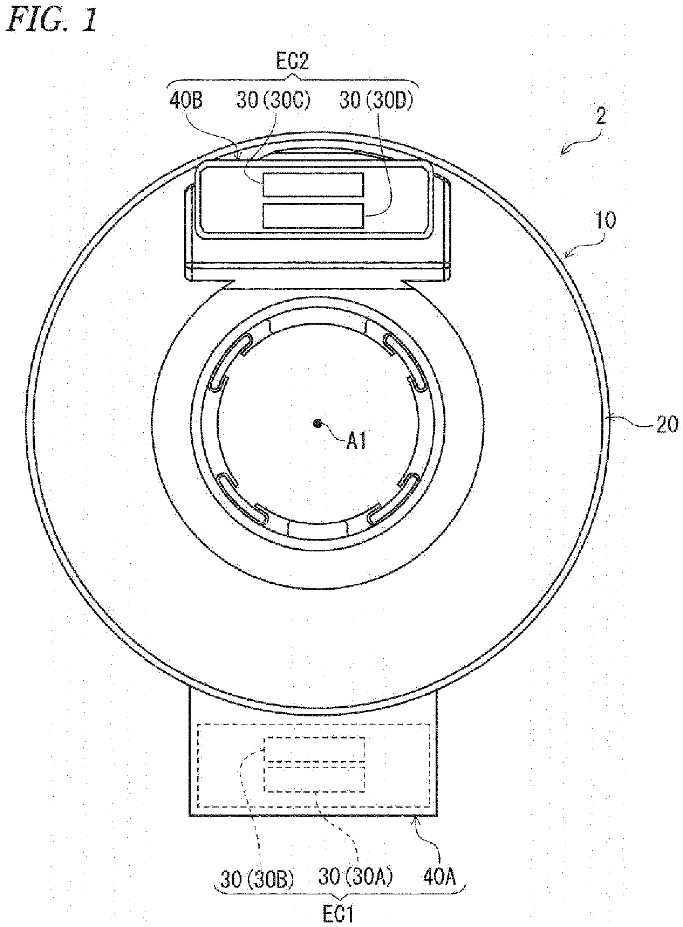

As shown in FIG. 1, a rotary connector device 2 comprises a stator 10 and a rotator 20. The stator 10 is configured to be attached to a vehicle body. The rotator 20 is provided rotatably relative to the stator 10 about a rotational axis A1. The rotator 20 is configured to be fastened to a steering wheel.

The rotary connector device 2 comprises a lead block 30. In the present embodiment, the rotary connector device 2 comprises a plurality of lead blocks 30A, 30B, 30C, and 30D. The plurality of lead blocks 30A and 30B is attached to the stator 10. The plurality of lead blocks 30C and 30D is attached to the rotator 20. The lead block 30A has substantially the same structure as the structure of the lead block 30C. The lead block 30B has substantially the same structure as the structure of the lead block 30D.

At least one of the stator 10 and the rotator 20 includes a lead-block attachment portion 40. In the present embodiment, the stator 10 includes a lead-block attachment portion 40A. The rotator 20 includes a lead-block attachment portion 40B. The lead block 30A is attached to the lead-block attachment portion 40A. The lead block 30B is attached to the lead-block attachment portion 40A. The lead block 30C is attached to the lead-block attachment portion 40B. The lead block 30D is attached to the lead-block attachment portion 40B. A total number of the lead blocks is not limited to the above number. A total number of the lead-block attachment portions is not limited to the above number.

The lead-block attachment portion 40A and lead block 30A and 30B constitutes an electric connector EC1. the lead-block attachment portion 40B and the lead blocks 30C and 30D constitutes the electric connector EC2. The electric connector EC1 is configured such that a vehicle-body-side connector is detachably attached to the electric connector EC1. The vehicle-body-side connector is electrically connected to electric circuits such as a control device. The electric connector EC2 is configured such that a steering-side connector is detachably attached to the electric connector EC2. The steering-side connector is electrically connected to electric circuits such as switches of the steering wheel and an air-bag device. The vehicle-body-side connector and the steering-side connector can also be referred to as external connectors.

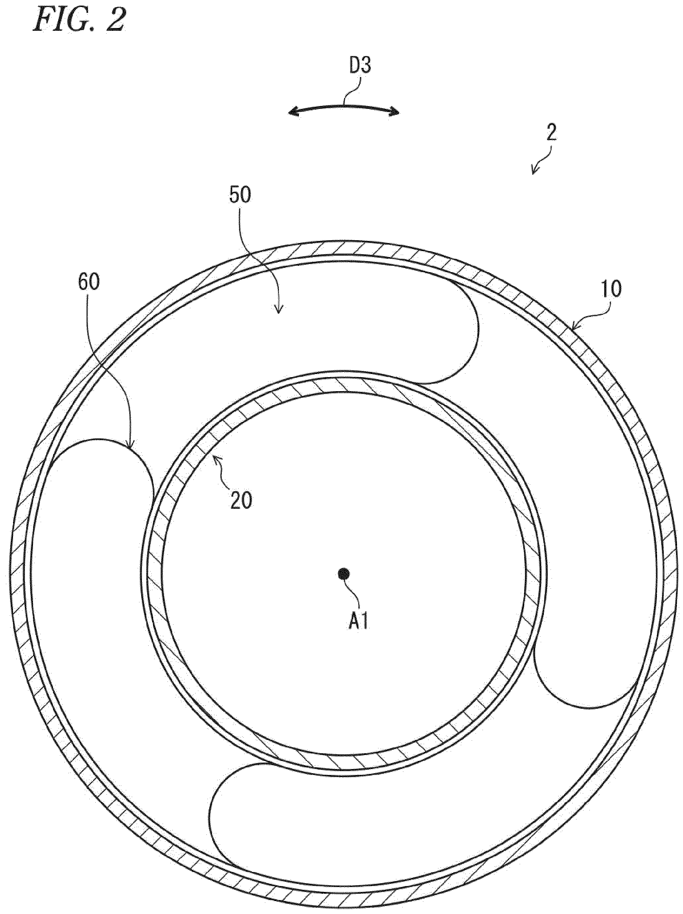

As shown in FIG. 2, the rotator 20 forms a cable housing space 50 provided to surround the rotational axis A1 together with the stator 10. For example, the cable housing space 50 is annular and extends in a circumferential direction D3 relative to the rotational axis A1. The rotary connector device 2 comprises an electric cable 60. The electric cable 60 electrically connects the lead block 30A and 30B to the lead blocks 30C and 30D. The electric cable 60 is disposed in the cable housing space 50. The electric cable 60 has flexibility and has a flat shape. The electric cable 60 can also be referred to as a flexible flat cable.

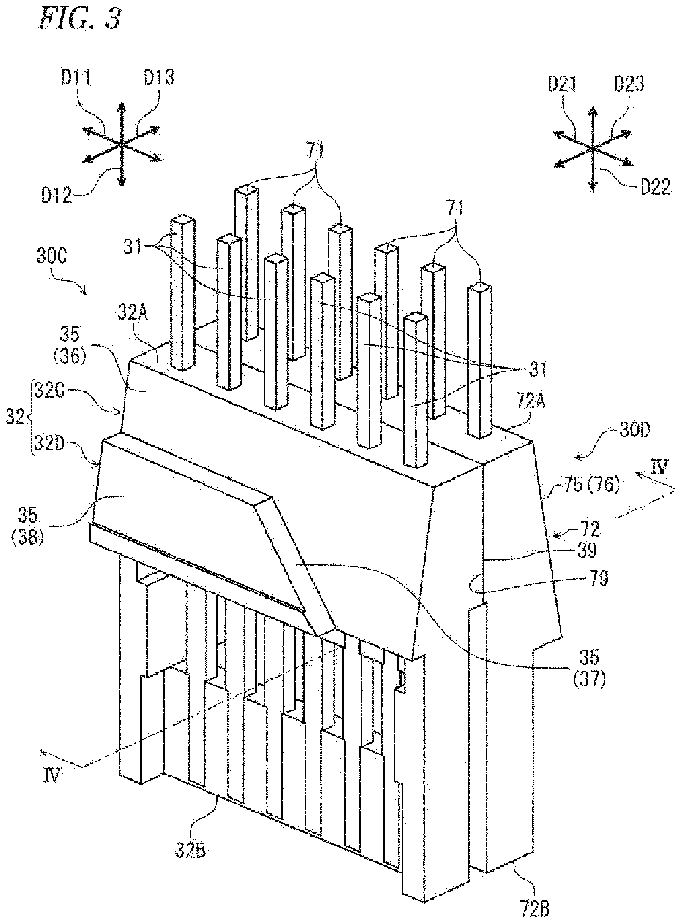

As shown in FIG. 3, the lead blocks 30C and 30D is attached to the rotator 20 (see FIG. 1) in a state where the lead blocks 30C and 30D are combined with each other. However, one of the lead blocks 30C and 30D can be omitted from the rotary connector device 2.

As shown in FIG. 3, the lead block 30C comprises a plurality of connection pins 31 and a pin holder 32. The plurality of connection pins 31 is arranged at intervals in the arrangement direction D11. The pin holder 32 holds the plurality of connection pins 31. The plurality of connection pins 31 protrudes from the pin holder 32 in a protruding direction D12 perpendicular to the arrangement direction D11. The plurality of connection pins 31 is partially embedded in the pin holder 32. The plurality of connection pins 31 are made of a metallic material. The pin holder 32 is made of a non-metallic material such as a resin material. The connection pin 31 can also be referred to as a bus bar 31.

The pin holder 32 includes a first end portion 32A and a second end portion 32B. The second end portion 32B is provided on an opposite side of the first end portion 32A in the protruding direction D12. The plurality of connection pins 31 protrudes from the first end portion 32A of the pin holder 32 in the protruding direction D12. The plurality of connection pins 31 extends from the first end portion 32A of the pin holder 32 to the second end portion 32B.

The pin holder 32 includes an inclined surface 35 inclined relative to the protruding direction D12. The inclined surface 35 is contactable with the lead-block attachment portion 40B in a state where the lead block 30C is attached to the lead-block attachment portion 40B.

The inclined surface 35 includes a first inclined surface 36 inclined relative to the protruding direction D12. The first inclined surface 36 is inclined relative to the thickness direction D13 perpendicular to the arrangement direction D11 and the protruding direction D12. The first inclined surface 36 is contactable with the lead-block attachment portion 40B in the state where the lead block 30C is attached to the lead-block attachment portion 40B.

The inclined surface 35 includes a second inclined surface 37. The second inclined surface 37 is inclined relative to the arrangement direction D11 and the protruding direction D12. The pin holder 32 includes a main portion 32C and a protruding portion 32D. The main portion 32C includes the first inclined surface 36. The protruding portion 32D protrudes from the first inclined surface 36 in the thickness direction D13 and includes the second inclined surface 37. The second inclined surface 37 is contactable with the lead-block attachment portion 40B in a state where the lead block 30C is attached to the lead-block attachment portion 40B.

The inclined surface 35 includes a third inclined surface 38. The third inclined surface 38 is inclined relative to the protruding direction D12 and the thickness direction D13. The protruding portion 32D includes the third inclined surface 38. The third inclined surface 38 is contactable with the lead-block attachment portion 40B in a state where the lead block 30C is attached to the lead-block attachment portion 40B.

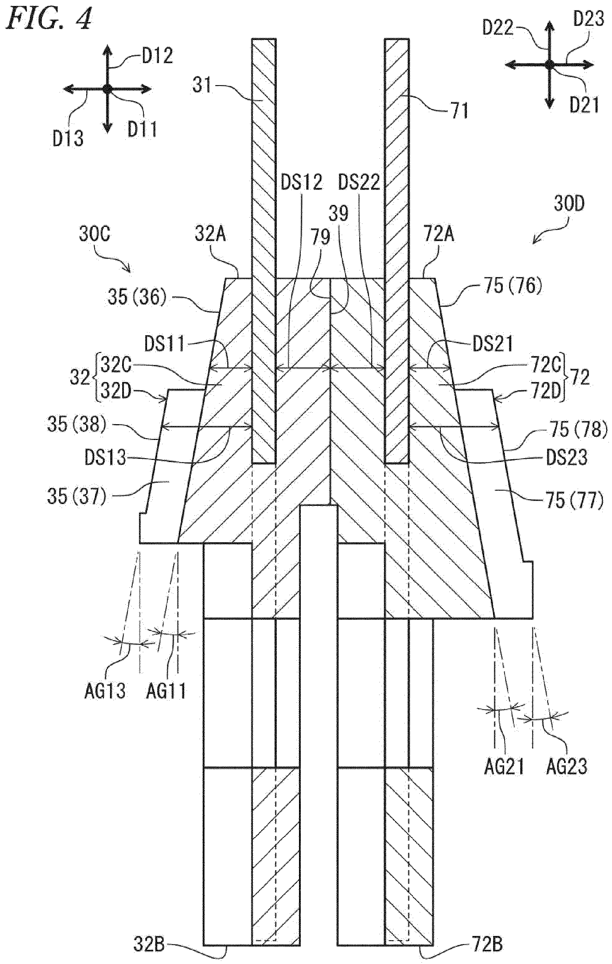

As shown in FIG. 4, the first inclined surface 36 is inclined relative to the protruding direction D12 such that a first distance DS11 defined from the plurality of connection pins 31 to the first inclined surface 36 in the thickness direction D13 decreases toward the first end portion 32A.

The pin holder 32 includes a reverse surface 39 provided on a reverse side of the first inclined surface 36 in the thickness direction D13. The reverse surface 39 is parallel to the protruding direction D12. The reverse surface 39 is parallel to the arrangement direction D11. A second distance DS12 defined from the plurality of connection pins 31 to the reverse surface 39 in the thickness direction D13 is constant.

The third inclined surface 38 is inclined relative to the protruding direction D12 such that a third distance DS13 defined from the plurality of connection pins 31 to the third inclined surface 38 in the thickness direction D13 decreases toward the first end portion 32A. When compared in the same position in the protruding direction D12, the third distance DS13 is longer than the first distance DS11.

In the present embodiment, the first inclined surface 36 is inclined relative to the protruding direction D12 at a first inclination angle AG11. The third inclined surface 38 is inclined relative to the protruding direction D12 at a third inclination angle AG13. In the present embodiment, the third inclination angle AG 13 is equal to the first inclination angle AG11. However, the third inclination angle AG13 can be different from the first inclination angle AG11.

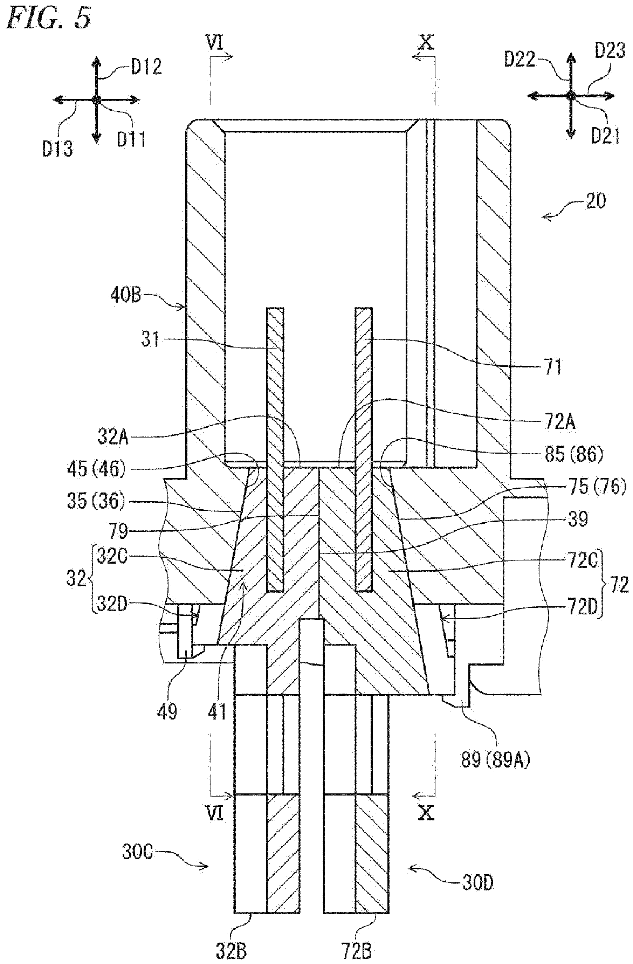

As shown in FIG. 5, the lead-block attachment portion 40B includes a lead-block housing space 41. The lead-block housing space 41 houses the lead block 30C in a state where the lead block 30C is attached to the lead-block attachment portion 40B. The lead-block housing space 41 at least partially houses the pin holder 32 in a state where the lead block 30C is attached to the lead-block attachment portion 40B.

The lead-block attachment portion 40B includes an inner inclined surface 45. The inner inclined surface 45 is contactable with the inclined surface 35 of the pin holder 32 in a state where the lead block 30C is attached to the lead-block attachment portion 40B. The inner inclined surface 45 is inclined relative to the protruding direction D12. The inner inclined surface 45 partially forms the lead-block housing space 41. The inner inclined surface 45 includes a first inner inclined surface 46. The first inner inclined surface 46 is contactable with the first inclined surface 36 of the pin holder 32 in a state where the lead block 30C is attached to the lead-block attachment portion 40B.

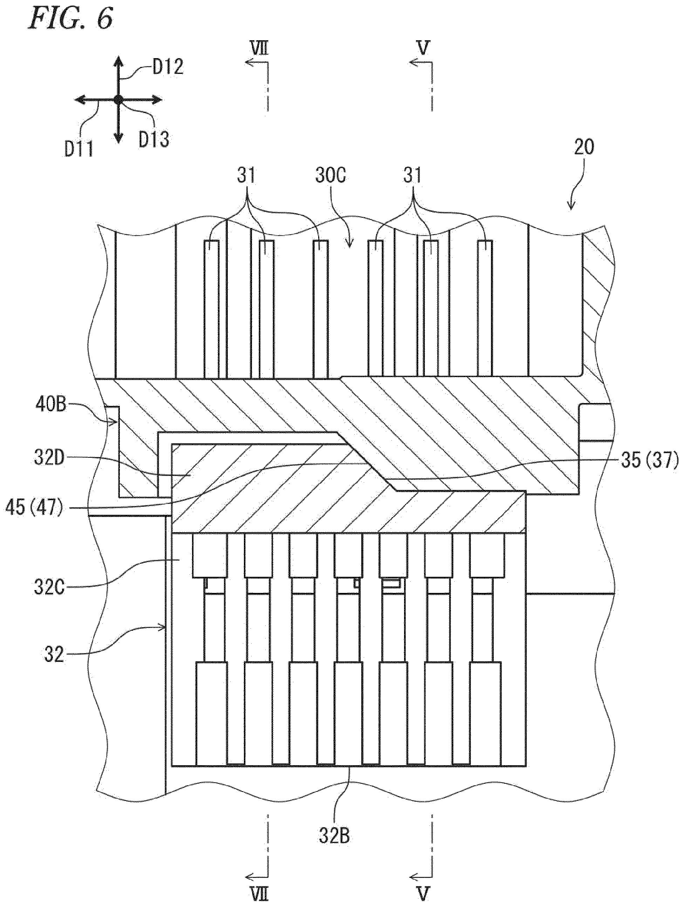

As shown in FIG. 6, the inner inclined surface 45 includes a second inner inclined surface 47. The second inner inclined surface 47 is contactable with the second inclined surface 37 of the pin holder 32 in a state where the lead block 30C is attached to the lead-block attachment portion 40B.

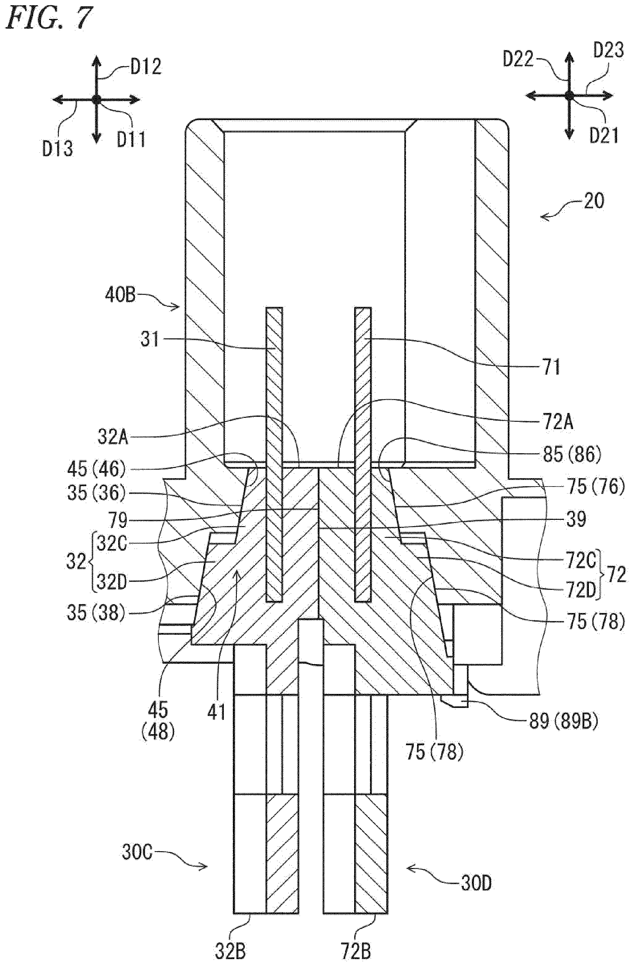

As shown in FIG. 7, the inner inclined surface 45 includes a third inner inclined surface 48. The third inner inclined surface 48 is contactable with the third inclined surface 38 of the pin holder 32 in a state where the lead block 30C is attached to the lead-block attachment portion 40B.

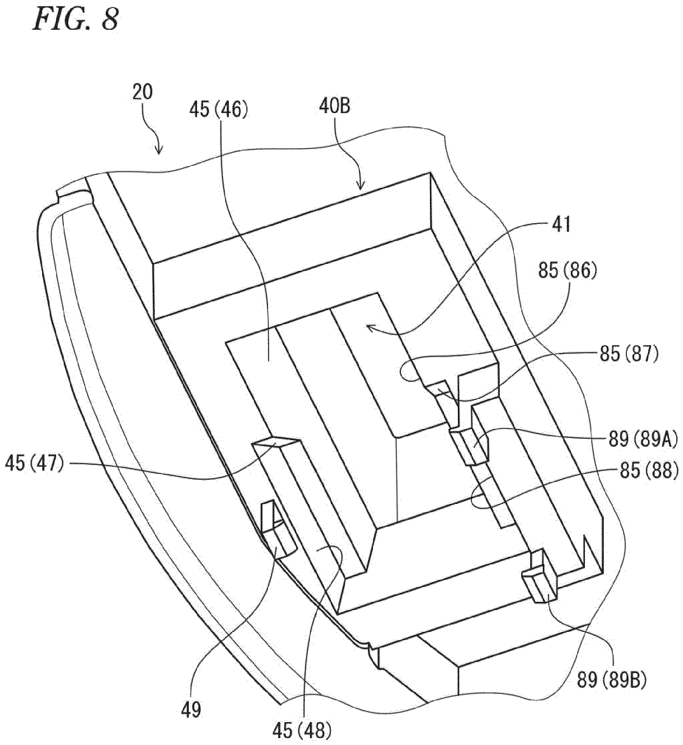

As shown in FIGS. 5 and 8, the lead-block attachment portion 40B includes a holding pawl 49. The holding pawl 49 holds the lead block 30C in a state where the lead block 30C is housed in the lead-block housing space 41. As shown in FIG. 5, the holding pawl 49 is configured to catch on the lead block 30C. In the present embodiment, the holding pawl 49 is configured to catch on the protruding portion 32D of the pin holder 32.

As shown in FIGS 3, 4, and 9, the lead block 30D has a shape which is substantially plane-symmetrical to the lead block 30C. However, the shape of the lead block 30D does not need to be substantially plane-symmetrical to the lead block 30C.

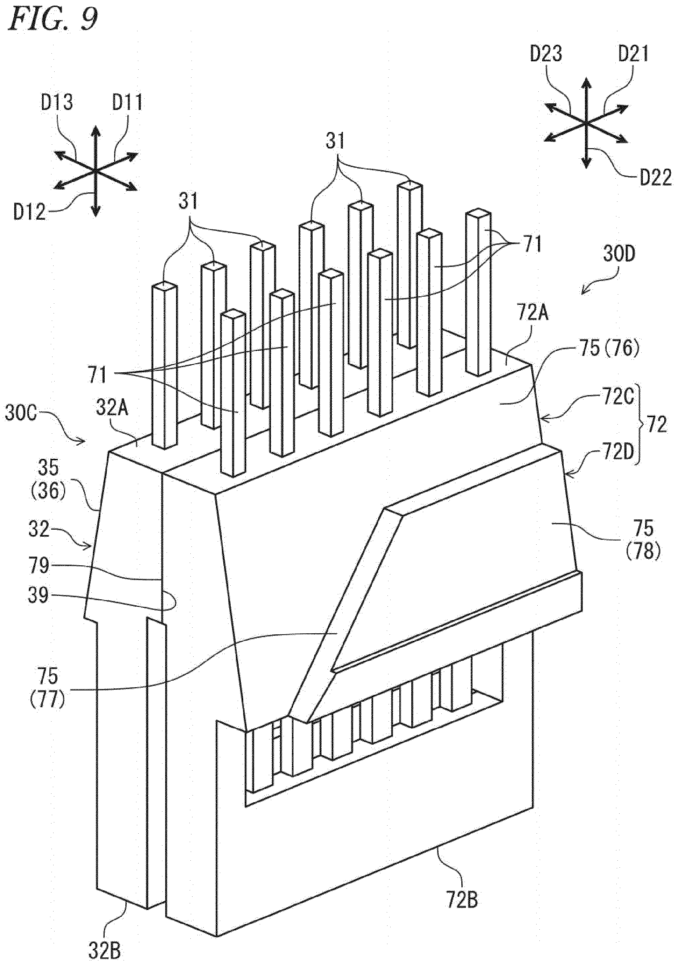

As shown in FIG. 9, the lead block 30D comprises a plurality of connection pins 71 and a pin holder 72. The plurality of connection pins 71 is arranged at intervals in the arrangement direction D21. The pin holder 72 holds the plurality of connection pins 71. The plurality of connection pins 71 protrudes from the pin holder 72 in the protruding direction D22 perpendicular to the arrangement direction D21. The plurality of connection pins 71 is partially embedded in the pin holder 72. The plurality of connection pins 71 is made of a metallic material. The pin holder 72 is made of a non-metallic material such as a resin material. The connection pin71 can also be referred to as a bus bar 71.

The pin holder 72 includes a first end portion72A and a second end portion72B. The second end portion72B is provided on an opposite side of the first end portion72A in the protruding direction D22. The plurality of connection pins 71 protrudes from the first end portion72A of the pin holder 72 in the protruding direction D22. The plurality of connection pins 71 extends from the first end portion72A of the pin holder 72 to the second end portion72B.

The pin holder 72 includes an inclined surface 75 inclined relative to the protruding direction D22. The inclined surface 75 includes a first inclined surface 76 relative to the protruding direction D22. The first inclined surface 76 is inclined relative to a thickness direction D23 perpendicular to the arrangement direction D21 and the protruding direction D22.

The inclined surface 75 includes a second inclined surface 77. The second inclined surface 77 is inclined relative to the arrangement direction D21 and the protruding direction D22. The pin holder 72 includes a main portion 72C and a protruding portion 72D. The main portion 72C includes the first inclined surface 76. The protruding portion 72D protrudes from the first inclined surface 76 in the thickness direction D23 and includes the second inclined surface 77.

The inclined surface 75 includes a third inclined surface 78. The third inclined surface 78 is inclined relative to the protruding direction D22 and the thickness direction D23. The protruding portion 72D includes the third inclined surface 78.

The arrangement direction D21 of the plurality of connection pins 71 is parallel to the arrangement direction D11 of the plurality of connection pins 31. The protruding direction D22 of the plurality of connection pins 71 is parallel to the protruding direction D12 of the plurality of connection pins 31. The thickness direction D23 of the pin holder 72 is parallel to the thickness direction D13 of the pin holder 32. However, the arrangement direction D21 of the plurality of connection pins 71 can be non-parallel to the arrangement direction D 11 of the plurality of connection pins 31. The protruding direction D22 of the plurality of connection pins 71 can be non-parallel to the protruding direction D12 of the plurality of connection pins 31. The thickness direction D23 of the pin holder 72 can be non-parallel to the thickness direction D13 of the pin holder 32.

As shown in FIG. 4, the first inclined surface 76 is inclined relative to the protruding direction D2 such that the first distance DS21 defined from the plurality of connection pins 71 to the first inclined surface 76 in the thickness direction D23 decreases toward the first end portion72A.

The pin holder 72 includes a reverse surface 79 provided on a reverse side of the first inclined surface 76 in the thickness direction D23. The reverse surface 79 is parallel to the protruding direction D22. The reverse surface 79 is parallel to the arrangement direction D21. A second distance DS22 defined from the plurality of connection pins 71 to the reverse surface 79 in the thickness direction D23 is constant.

The third inclined surface 78 is inclined relative to the protruding direction D22 such that a third distance DS23 defined from the plurality of connection pins 71 to the third inclined surface 78 in the thickness direction D23 decreases toward the first end portion72A. When compared in the same position in the protruding direction D22, the third distance DS23 is longer than the first distance DS21.

In the present embodiment, the first inclined surface 76 is inclined relative to the protruding direction D22 at the first inclination angle AG21. The third inclined surface 78 is inclined relative to the protruding direction D22 at a third inclination angle AG23. In the present embodiment, the third inclination angle AG23 is equal to the first inclination angle AG21. However, the third inclination angle AG23 can be different from the first inclination angle AG21.

As shown in FIG. 5, the lead-block attachment portion 40B includes the lead-block housing space 41. The lead-block housing space 41 houses the lead block 30D in a state where the lead block 30D is attached to the lead-block attachment portion 40B. The lead-block housing space 41 at least partially houses the pin holder 72 in a state where the lead block 30D is attached to the lead-block attachment portion 40B.

The lead-block attachment portion 40B includes an inner inclined surface 85. The inner inclined surface 85 is contactable with the inclined surface 75 of the pin holder 72 in a state where the lead block 30D is attached to the lead-block attachment portion 40B. The inner inclined surface 85 is inclined relative to the protruding direction D22. The inner inclined surface 85 partially forms the lead-block housing space 41. The inner inclined surface 85 includes a first inner inclined surface 86. The first inner inclined surface 86 is contactable with the first inclined surface 76 of the pin holder 72 in a state where the lead block 30D is attached to the lead-block attachment portion 40B.

The reverse surface 79 of the pin holder 72 faces toward the reverse surface 39 of the pin holder 32 in a state where the lead blocks 30C and 30D is attached to the lead-block attachment portion 40B. The reverse surface 79 of the pin holder 72 is in contact with the reverse surface 39 of the pin holder 32 in a state where the lead blocks 30C and 30D are attached to the lead-block attachment portion 40B. However, another member can be provided between the reverse surface 79 of the pin holder 72 and the reverse surface 39 of the pin holder 32.

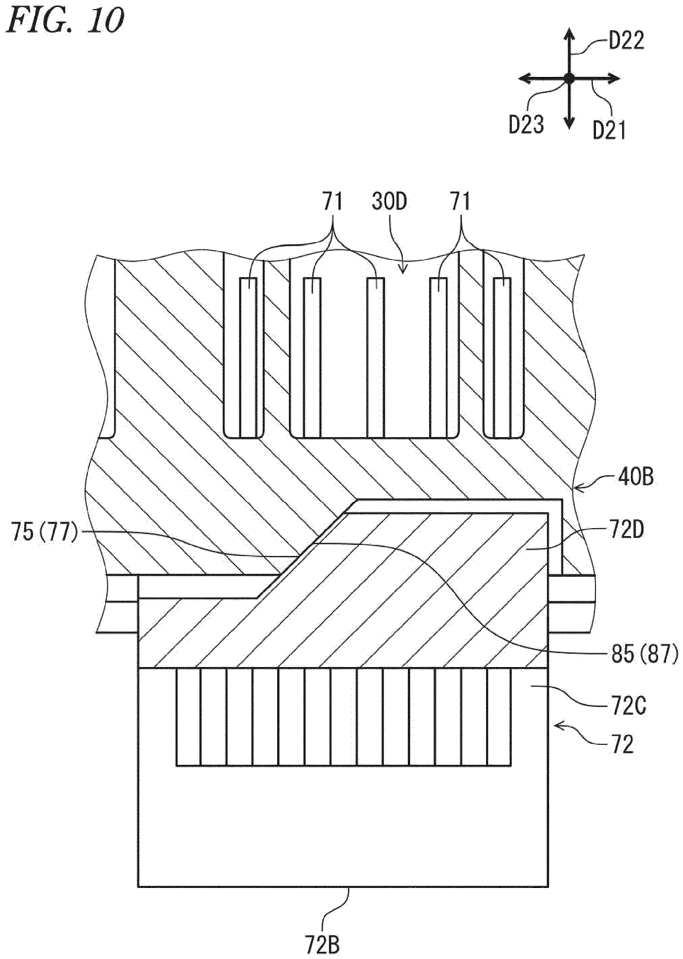

As shown in FIG. 10, the inner inclined surface 85 includes a second inner inclined surface 87. The second inner inclined surface 87 is contactable with the second inclined surface 77 of the pin holder 72 in a state where the lead block 30D is attached to the lead-block attachment portion 40B.

As shown in FIG. 7, the inner inclined surface 85 includes a third inner inclined surface 88. The third inner inclined surface 88 is contactable with the third inclined surface 78 of the pin holder 72 in a state where the lead block 30D is attached to the lead-block attachment portion 40B.

As shown in FIGS. 5 and 8, the lead-block attachment portion 40B includes a holding pawl 89. The holding pawl 89 holds the lead block 30D in a state where the lead block 30D is housed in the lead-block housing space 41. As shown in FIG. 5, the lead-block attachment portion 40B includes holding pawls 89A and 89B. The holding pawl 89A and 89B is configured to catch on the lead block 30D. In the present embodiment, the holding pawls 89A and 89B are configured to catch on the protruding portion 72D of the pin holder 72.

As shown in FIGS. 5 to 7, the lead block 30C is attachable to the lead-block attachment portion 40B in only a specific orientation. Specifically, as shown in FIG. 8, the lead-block housing space 41 includes a recess 42. The recess 42 is defined by the second inner inclined surface 47 and the third inner inclined surface 48. As shown in FIG. 7, the protruding portion 32D of the lead block 30C is at least partially provided in the recess 42. Because of the protruding portion 32D and the recess 42, the lead block 30C is attachable to the lead-block attachment portion 40B in only the specific orientation.

As shown in FIGS. 5 to 7, the lead block 30D is attachable to the lead-block attachment portion 40B in only a specific orientation. Specifically, as shown in FIG. 8, the lead-block housing space 41 includes the recess 43. The recess 43 is defined by the second inner inclined surface 87 and the third inner inclined surface 88. As shown in FIG. 7, the protruding portion 72D of the lead block 30D is at least partially provided in the recess 43. Because of the protruding portion 72D and the recess 43, the lead block 30D is attachable to the lead-block attachment portion 40B in only the specific orientation.

As shown in FIG. 3, the pin holder 32 includes a first lateral surface 33 and a second lateral surface 34. The first lateral surface 33 faces in the arrangement direction D11. The second lateral surface 34 faces in the arrangement direction D11. The second lateral surface 34 is provided on a reverse side of the first lateral surface 33 in the arrangement direction D11. The second lateral surface 34 is disposed closer to the protruding portion 32D in the arrangement direction D11 than the first lateral surface 33.

As shown in FIG. 9, the pin holder 72 includes a first lateral surface 73 and a second lateral surface 74. The first lateral surface 73 and the second lateral surface 74 faces in the arrangement direction D11. The second lateral surface 74 is provide on a reverse side of the first lateral surface 73 in the arrangement direction D11. The second lateral surface 74 is disposed closer to the protruding portion 72D in the arrangement direction D11 than the first lateral surface 73. The first lateral surface 33 of the pin holder 32 and the first lateral surface 73 of the pin holder 72 are disposed on the same side in the arrangement direction D11.

As is clear from the positions of the protruding portions 32D and 72D shown in in FIGS. 3 and 9 and the positions of the recesses 42 and 43 shown in FIG. 8, the protruding portion 32D of the pin holder 32 cannot be inserted into the recess 43. Thus, the lead block 30C is attachable to the lead-block attachment portion 40B in only an orientation in which the protruding portion 32D is inserted into the recess 42. Likewise, the protruding portion 72D of the pin holder 72 cannot be inserted into the recess 42. Thus, the lead block 30D is attachable to the lead-block attachment portion 40B in only an orientation in which the protruding portion 72D is inserted into the recess 43.

As explained above, the lead block 30 comprises the plurality of connection pins 31 and the pin holder 32. The plurality of connection pins 31 is arranged at intervals in the arrangement direction D11. The pin holder 32 holds the plurality of connection pins 31. The plurality of connection pins 31 protrudes from the pin holder 32 in the protruding direction D12 perpendicular to the arrangement direction D11. The pin holder 32 includes the inclined surface 35 inclined relative to the protruding direction D12.

With the lead block 30, by bringing the inclined surface 35 into contact with the lead-block attachment portion 40, it is possible to reduce the wobble of the lead block 30 relative to the lead-block attachment portion 40 in the protruding direction D12 and a direction perpendicular to the protruding direction D12.

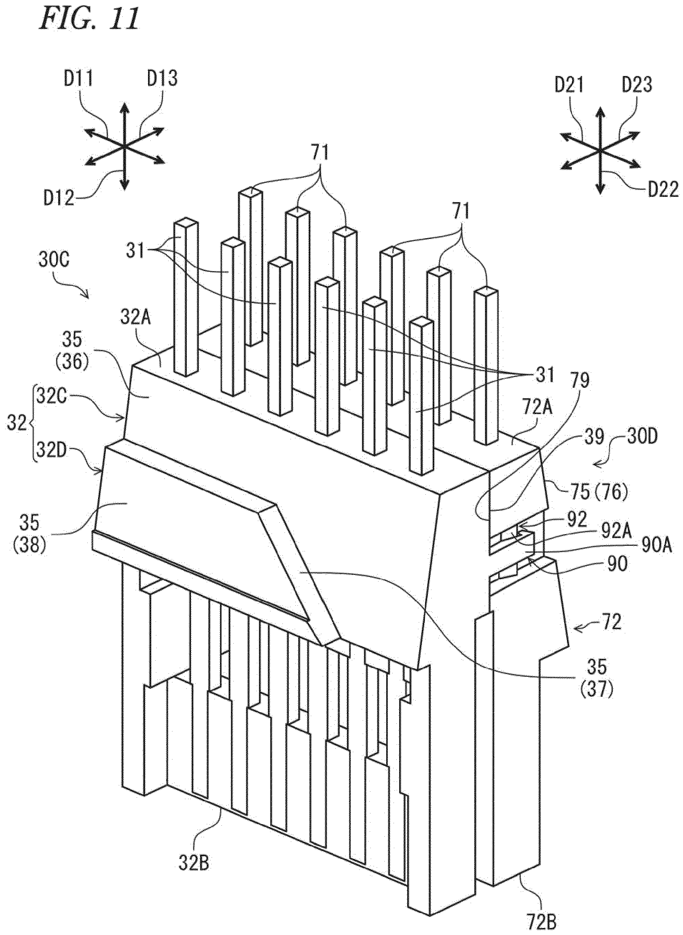

As shown in FIG. 11, the pin holder 32 of the lead block 30C can include a coupling portion 90 configured to couple another lead block (for example, the lead block 30D) and the pin holder 32. The pin holder 72 of the lead block 30D can include a coupling portion 92 configured to couple another lead block (for example, the lead block 30C) and the pin holder 72. The coupling portion 90 includes a coupling pawl 90A. The coupling portion 92 includes a protrusion 92A. By the coupling pawl 90A being caught on the protrusion 92A, the pin holder 32 of the lead block 30C and the pin holder 72 of the lead block 30D are coupled. The coupling portions 90 and 92 constitutes, for example, a snap-fit structure. The coupling portions 90 and 92 couples, for example, the pin holders 32 and 72 such that the lead block 30C and the lead block 30D are relatively movable in a predetermined range. The coupling portions 90 and 92 makes it easier to attach the lead blocks 30C and 30D to the lead-block attachment portion 40B as a single unit. The structures of the coupling portions 90 and 92 are not limited to the structures shown in FIG. 11. The structures of the coupling portions 90 and 92 can be applied to the lead block 30A and 30B.

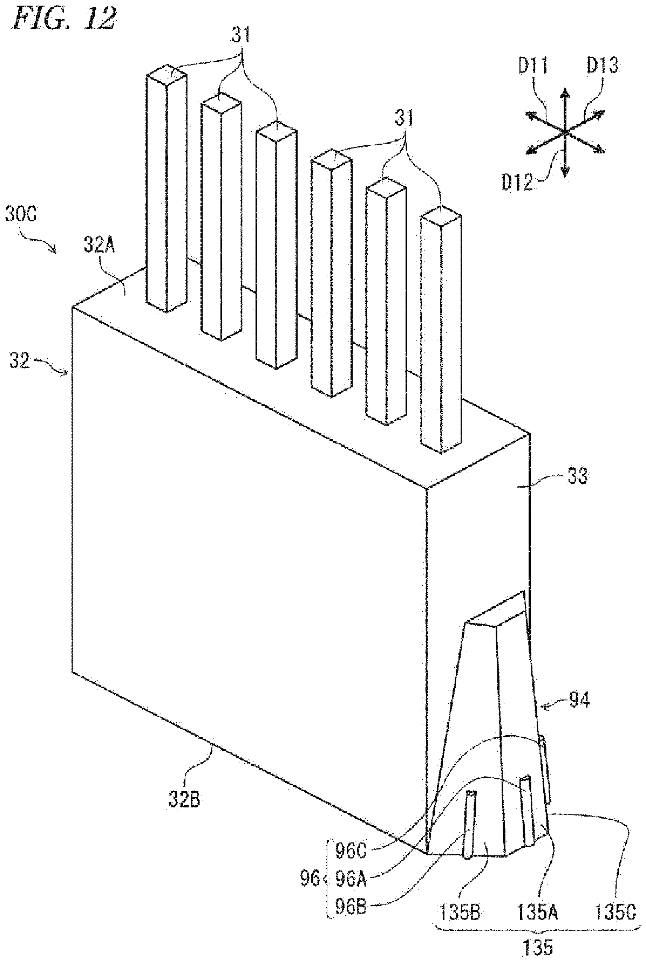

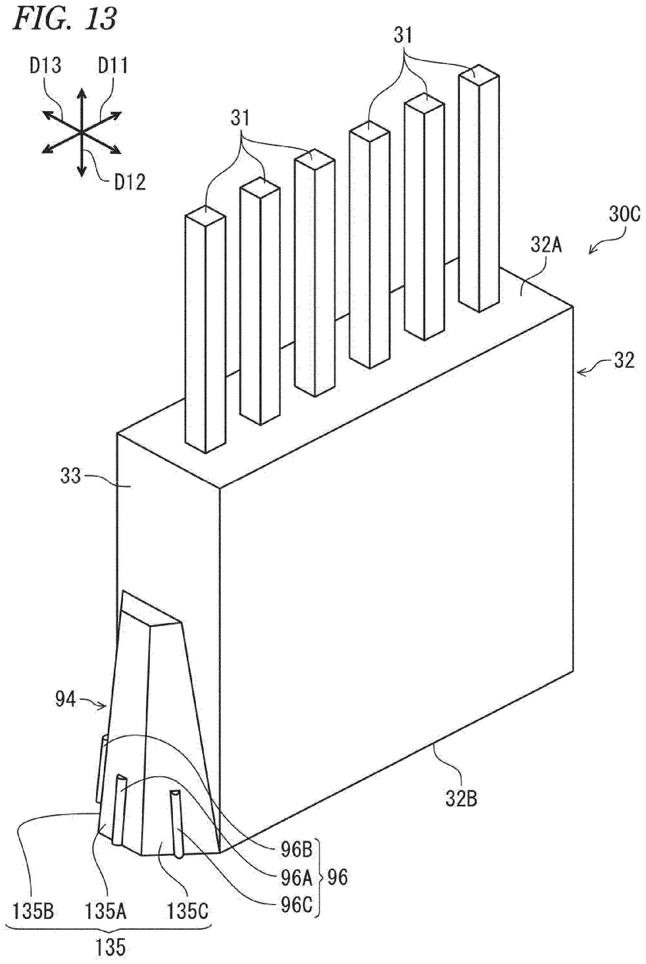

As shown in FIGS. 12 and 13, the pin holder 32 can include a first protruding portion 94 protruding from the first lateral surface 33. The first protruding portion 94 includes an inclined surface 135. The inclined surface 135 is inclined relative to the protruding direction D12. For example, the inclined surface 135 includes a plurality of inclined surfaces 135A, 135B, and 135C. The inclined surface 135A is disposed between the inclined surface 135B and 135C. The inclined surface 135A is inclined relative to the arrangement direction D11 and the protruding direction D12. The inclined surface 135B is inclined relative to the arrangement direction D11, the protruding direction D12, and the thickness direction D13. The inclined surface 135C is inclined relative to the arrangement direction D11, the protruding direction D12, and the thickness direction D13. The inclined surface 135B is inclined relative to the inclined surface 135A. The inclined surface 135C is inclined relative to the inclined surface 135A. Since the first protruding portion 94, which includes the inclined surface 135, is provided on the first lateral surface 33, it becomes easier, for example, to reduce the wobble of the lead block 30C relative to the lead-block attachment portion 40B at least in the arrangement direction D11. Furthermore, in a case where there is only one lead block 30C (when the lead block 30D is omitted), it becomes easier to reduce the wobble of the lead block 30C relative to the lead-block attachment portion 40B solely with the inclined surface 135 of the first protruding portion 94.

The pin holder 32 includes a second protruding portion 96 protruding from the inclined surface 135. For example, the second protruding portion 96 includes a plurality of the second protruding portions 96A, 96B, and 96C. The second protruding portion 96A protrudes from the inclined surface 135A. The second protruding portion 96B protrudes from the inclined surface 135B. The second protruding portion 96C protrudes from the inclined surface 135C.

The first protruding portion 94 has a first volume. The second protruding portion 96 has a second volume. Each of the second protruding portions 96A, 96B, and 96C has the second volume. The second volume of the second protruding portion 96 is smaller than the first volume of the first protruding portion 94. The second volume of the second protruding portion 96A is smaller than the first volume of the first protruding portion 94. The second volume of the second protruding portion 96B is smaller than the first volume of the first protruding portion 94. The second volume of the second protruding portion 96C is smaller than the first volume of the first protruding portion 94.

When the lead block 30C is attached to the lead-block attachment portion 40B, the second protruding portion 96 (for example, at least one of the second protruding portions 96A, 96B, and 96C) is deformed between the first protruding portion 94 and the lead-block attachment portion 40B. This can absorb the dimensional error of at least one of the lead block 30C and the lead-block attachment portion 40B. At least one of the second protruding portions 96A, 96B, and 96C can be omitted from the pin holder 32. The shape of the second protruding portions 96A, 96B, and 96C is not limited to the shapes shown in FIGS. 12 and 13. The structure of the second protruding portion 96 can be applied to the lead blocks 30A, 30B, and 30D.

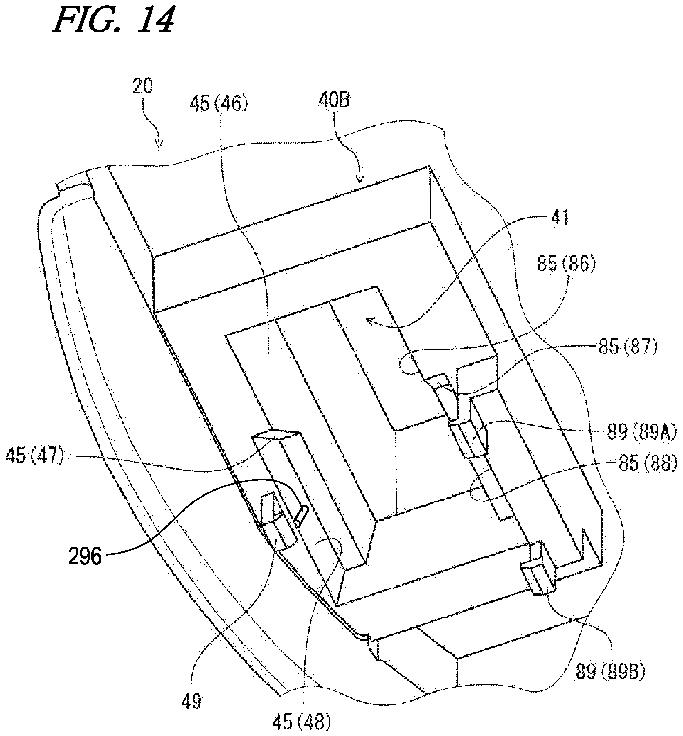

Similarly, as shown in FIG. 14, the lead-block attachment portion 40B can include a third protruding portion 296 protruding from the inner inclined surface 45. In the modification shown in FIG. 14, the third protruding portion 296 protrudes from the third inner inclined surface 48. However, the third protruding portion 29 can be provided to at least one of the first inner inclined surface 46 and the second inner inclined surface 47.

In the present application, the term "comprising" and its derivatives, as used herein, are intended to be open ended terms that specify the presence of the stated features, elements, components, groups, integers, and/or steps, but do not exclude the presence of other unstated elements. This concept also applies to words of similar meaning, for example, the terms "have," "include" and their derivatives.

In the present application, the ordinal numbers such as "first" and "second" recited in the present application are merely identifiers, but do not have any other meanings (for example, a particular order and the like). Moreover, for example, the term "first element" itself does not imply an existence of "second element," and the term "second element" itself does not imply an existence of "first element."

Additionally, expressions such as "parallel," "orthogonal," and "identical" in the present disclosure should not be interpreted strictly and include respectively the meanings of "substantially parallel," "substantially orthogonal," and "substantially identical". In addition, other expressions related to the arrangement are not strictly construed.

The expression "at least one of A and B" in the present disclosure includes, for example, all of (1) A alone, (2) B alone, and (3) both A and B. The expression "at least one of A, B and C" includes, for example, all of (1) A alone, (2) B alone, (3) C alone, (4) A and B, (5) B and C, (6) A and C, and (7) A, B and C. In the present disclosure, the expression "at least one of A and B" is not construed as "at least one of A and at least one of B."

It is apparent from the above disclosure that various changes and modifications of the present invention are possible. Accordingly, the present invention may be implemented in a manner different from the specific disclosure of the present application without departing from the spirit of the present invention.

### Reference Signs List

2: Rotary connector device
10: Stator
20: Rotator
30, 30A, 30B, 30C, 30D: Lead block
31: Connection pin
32: Pin holder
32A: First end portion
32B: Second end portion
32C: Main portion
32D: Protruding portion
33: First lateral surface
34: Second lateral surface
35, 135: Inclined surface
36: First inclined surface
37: Second inclined surface
38: Third inclined surface
39: Reverse surface
40, 40A, 40B: Lead-block attachment portion
41: Lead-block housing space
45: Inner inclined surface
46: First inner inclined surface
47: Second inner inclined surface
48: Third inner inclined surface
49: Holding pawl
71: Connection pin
72: Pin holder
72A: First end portion
72B: Second end portion
72C: Main portion
72D: Protruding portion
75: Inclined surface
76: First inclined surface
77: Second inclined surface
78: Third inclined surface
79: Reverse surface
85: Inner inclined surface
86: First inner inclined surface
87: Second inner inclined surface
88: Third inner inclined surface
89, 89A, 89B: Holding pawl
90, 92: Coupling portion
94: First protruding portion
96: Second protruding portion
A1: Rotational axis
AG11: First inclination angle
AG13: Third inclination angle
AG21: First inclination angle
AG23: Third inclination angle
D11: Arrangement direction
D12: Protruding direction
D13: Thickness direction
D21: Arrangement direction
D22: Protruding direction
D23: Thickness direction
DS11: First distance
DS12: Second distance
DS13: Third distance
DS21: First distance
DS22: Second distance
DS23: Third distance

## Claims

1. A lead block for a rotary connector device comprising:
a plurality of connection pins arranged at intervals in an arrangement direction; and
a pin holder holding the plurality of connection pins,
the plurality of connection pins protruding from the pin holder in a protruding direction perpendicular to the arrangement direction, and
the pin holder including an inclined surface inclined relative to the protruding direction.

2. The lead block according to claim 1, wherein
the inclined surface includes a first inclined surface inclined relative to the protruding direction, and
the first inclined surface is inclined relative to a thickness direction perpendicular to the arrangement direction and the protruding direction.

3. The lead block according to claim 2, wherein
the pin holder includes a first end portion and a second end portion provided on an opposite side of the first end portion in the protruding direction,
the plurality of connection pins protrudes from the first end portion in the protruding direction, and
the first inclined surface is inclined relative to the protruding direction such that a first distance defined in the thickness direction from the plurality of connection pins to the first inclined surface decreases toward the first end portion.

4. The lead block according to claim 2 or 3, wherein
the inclined surface includes a second inclined surface inclined relative to the arrangement direction and the protruding direction.

5. The lead block according to claim 4, wherein
the pin holder includes a main portion and a protruding portion,
the main portion includes the first inclined surface, and
the protruding portion protrudes from the first inclined surface in the thickness direction and includes the second inclined surface.

6. The lead block according to claim 5, wherein
the inclined surface includes a third inclined surface inclined relative to the protruding direction and the thickness direction, and
the protruding portion includes the third inclined surface.

7. The lead block according to any one of claims 2 to 6, wherein
the pin holder includes a reverse surface provided on a reverse side of the first inclined surface in the thickness direction, and
the reverse surface is parallel to the protruding direction.

8. The lead block according to claim 7, wherein
the reverse surface is parallel to the arrangement direction.

9. The lead block according to any one of claims 1 to 8, wherein
the pin holder includes a coupling portion configured to couple another lead block and the pin holder.

10. The lead block according to any one of claims 1 to 9, wherein
the pin holder includes
a first lateral surface facing in the arrangement direction, and
a first protruding portion protruding from the first lateral surface, and
the first protruding portion includes the inclined surface.

11. The lead block according to claim 10, wherein
the pin holder includes a second protruding portion protruding from the inclined surface.

12. A rotary connector device comprising:
a stator;
a rotator provided rotatably relative to the stator about a rotational axis; and
the lead block according to any one of claims 1 to 11,
at least one of the stator and the rotator including a lead-block attachment portion, and
the lead block being attached to the lead-block attachment portion.

13. The rotary connector device according to claim 12, wherein
the lead-block attachment portion includes an inner inclined surface contactable with the inclined surface of the pin holder in a state where the lead block is attached to the lead-block attachment portion, and
the inner inclined surface is inclined relative to in the protruding direction.

14. The rotary connector device according to claim 12 or 13, wherein
the lead-block attachment portion includes
a lead-block housing space housing the lead block in a state where the lead block is attached to the lead-block attachment portion, and
a holding pawl holding the lead block in a state where the lead block is housed in the lead-block housing space.

15. The rotary connector device according to any one of claims 12 to 14, wherein
the lead-block attachment portion includes a third protruding portion protruding from the inner inclined surface.

16. The rotary connector device according to any one of claims 12 to 15, wherein
the lead block is attachable to the lead-block attachment portion in only a specific orientation.
